# EUROPÄISCHE PATENTSCHRIFT

(11) **EP 1 012 087 B1**
(45) Veröffentlichungstag und Bekanntmachung des Hinweises auf die Patenterteilung: **11.12.2002**
(21) Anmeldenummer: 98946453.2
(22) Anmeldetag: 14.09.1998
(51) Int. Cl.: B65G 47/82, B07C 5/36

(54) **VORRICHTUNG UND VERFAHREN ZUM AUSLEITEN VON GEGENSTÄNDEN, DIE AUF EINEM TRANSPORTEUR BEFÖRDERT WERDEN**
DEVICE FOR OUTWARD GUIDANCE OF ARTICLES TRANSPORTED ON A CONVEYER
DISPOSITIF ET PROCEDE POUR METTRE A L'ECART DES OBJETS TRANSPORTES SUR UN TRANSPORTEUR

(30) Priorität: 12.09.1997 DE 29716459 U
(43) Veröffentlichungstag der Anmeldung: 28.06.2000
(73) Patentinhaber: Heuft Systemtechnik GmbH, 56659 Burgbrohl (DE)
(72) Erfinder: HEUFT, Bernhard, D-56659 Burgbrohl (DE); GOLLER, Hans-Ulrich, D-53173 Bonn (DE)
(74) Vertreter: Gritschneder, Martin, Dipl.-Phys.
(86) Internationale Anmeldenummer: EP9805832
(87) Internationale Veröffentlichungsnummer: WO99014142

(56) Entgegenhaltungen:
- EP-A- 0 003 111
- DE-A- 3 130 308
- US-A- 3 791 518
- US-A- 5 176 244

## Beschreibung

Die Erfindung betrifft eine Vorrichtung und ein Verfahren zum Ausleiten von Gegenständen, die auf einem Transporteur transportiert werden. Die Gegenstände werden mittels einer Ausleitvorrichtung vom Transporteur heruntergeschoben, die ein oder mehrere Ausleitsegmente aufweist, das bzw. die eine Strecke mit dem Transporteur mitbewegbar sind und quer zur Transportrichtung einzeln ausfahrbar sind.

Derartige Vorrichtungen werden z.B. in Getränkeabfüllanlagen eingesetzt, um defekte Behälter, z.B. Glasflaschen, oder unvollständig gefüllte oder nicht korrekt verschlossene Behälter auszusortieren. Aus CA-A-985213 und US-A-3,791,518 sind derartige Vorrichtungen bekannt. Die Ausleitsegmente sind verschiebbar ausgebildet und werden auf einer endlosen Bahn geführt, wobei sie parallel und synchron zum Transporteur geführt werden und unterhalb des Transporteurs oder seitlich versetzt dazu zurückgeführt werden. Das Ausfahren der einzelnen Ausleitsegmente quer zur Transportrichtung erfolgt durch eine Kulissensteuerung.

Aus EP-A-0 003 111 ist eine Vorrichtung zum seitlichen Ablenken von Gegenständen, die auf einem Transporteur transportiert werden bekannt, bei der die Ablenkeinrichtung in eine Mehrzahl von Ablenksegmenten unterteilt ist, die zusammen eine kontinuierliche Ablenkfläche bilden und einzeln ausfahrbar sind. Die abzulenkenden Gegenstände werden entlang einer feststehenden Ablenkfläche ausgeleitet. Sie werden dabei zwangsläufig abgebremst und insbesondere leichte Gegenstände wie leere Getränkeflaschen können dadurch umfallen. Bei eng aufeinanderfolgenden Gegenständen kann das Abbremsen des auszuleitenden Gegenstandes auch zu Aufstauungen der nachfolgenden Gegenstände führen.

Der Erfindung liegt die Aufgabe zugrunde, den mechanischen Aufwand zu verringern, der für das Ausleiten von Gegenständen, die auf einem Transporteur transportiert werden, erforderlich ist.

Im Rahmen der erfindungsgemäßen Vorrichtung wird diese Aufgabe dadurch gelöst, daß das oder die Ausleitsegmente in einem Schlitten in Transportrichtung nebeneinander geführt sind und daß der Schlitten in Transportrichtung hin und her bewegbar ist.

Vorzugsweise wird der Schlitten so gesteuert, daß er eine Strecke etwa synchron mit dem Transporteur mitläuft, wobei die Länge der Strecke, die der Schlitten synchron mit der Transporteinrichtung mitläuft, kürzer ist als der Abstand zwischen dem ersten und dem letzten der in dem Schlitten geführten Ausleitsegmente plus dem minimalen Abstand der Gegenstände.

Im Rahmen des erfindungsgemäßen Verfahrens wird diese Aufgabe dadurch gelöst, daß die Ausleitsegmente in einem Schlitten in Transportrichtung nebeneinander angeordnet sind, daß der Schlitten in Transportrichtung hin und her bewegbar ist, daß die Länge der Strecke, die sich der Schlitten mit dem Transporteur bewegt, kürzer ist als der Abstand zwischen dem ersten und dem letzten der Ausleitsegmente innerhalb des Schlittens plus dem Minimalabstand der Gegenstände, und zwar um die Wegstrecke, die sich der Transporteur während der Rückbewegung des Schlittens weiterbewegt, und daß die Gegenstände gruppenweise von dem Transporteur geschoben werden, wobei jede Gruppe mit einem ersten auszuleitenden Gegenstand beginnt und alle weiteren auszuleitenden Gegenstände umfaßt, die innerhalb einer Wegstrecke auf den ersten auszuleitenden Gegenstand folgen, deren Länge gleich der Länge der Mitbewegung des Schlittens mit dem Transporteur ist.

Die durch die Erfindung erzielbaren Vorteile bestehen insbesondere darin, daß durch die zum Transporteur synchrone Bewegung der Ausleitsegmente eine lange, sanfte Ausleitkurve erzielt werden kann. Die Bewegung der Ausleitsegmente in Transportrichtung (X-Richtung) und quer dazu (Y-Richtung) ist getrennt steuerbar, so daß beide Bewegungskomponenten entkoppelt sind. Die Ausleitkurve ist daher ohne mechanische Umbauten steuerbar und an die Standfestigkeit, das Gewicht oder sonstige Merkmale der Gegenstände sowie an die Geschwindigkeit des Transporteurs anpassbar. Wenn keine Gegenstände auszuleiten sind, so bleibt der Schlitten in Ruhestellung, wodurch gegenüber den eingangs genannten Ausleitvorrichtungen mit synchron mitlaufenden, auf einer endlosen Bahn geführten Ausleitsegmenten der Verschleiß verringert wird.

Der Schlitten ist in einem Rahmengestell in Transportrichtung hin und her fahrbar geführt. Aus einer Anfangsposition wird der Schlitten etwa mit der gleichen Geschwindigkeit wie der Transporteur neben dem Transporteur bewegt (X-Richtung), so daß während dieser Hinbewegung des Schlittens jedes Ausleitsegment im wesentlichen mit einer bestimmten Stelle des Transporteurs mitläuft und durch Ausfahren des Ausleitsegments quer zur Transportrichtung (Y-Richtung) ein an dieser Stelle stehender Behälter von dem Transporteur geschoben werden kann. Alle auszuleitenden Gegenstände, die sich innerhalb der Länge des Schlittens befinden, werden vorzugsweise gleichzeitig vom Transporteur herunter geschoben. Die auf dem Transporteur transportierten Gegenstände werden somit gruppenweise verarbeitet. Am Ende der Hinbewegung wird der Schlitten auf der selben Bahn wieder zur Anfangsposition zurückgefahren. Die Strecke der synchronen Hinbewegung ist dabei mindestens um das Stück kürzer als der Abstand zwischen dem ersten und letzten Ausleitsegment plus dem Minimalabstand der Gegenstände, um das sich der Transporteur innerhalb der für die Rückbewegung und zum Beschleunigen und Abbremsen des Schlittens benötigten Zeit weiterbewegt.

Die Steuerung dieser Bewegung des Schlittens erfolgt dabei vorzugsweise so, daß sich der Schlitten in einer Ruhestellung am Anfang oder Ende der Ausleitstrecke befindet. Sind in dem Strom der Gegenstände einer oder mehrere Gegenstände auszuleiten, so bewegt sich der Schlitten, falls er sich in seiner Ruhestellung am Ende der Ausleitstrecke befindet, zunächst an den Anfang der Ausleitstrecke. Am Anfang der Ausleitstrecke wird der Beschleunigungsvorgang so gesteuert, daß das in Transportrichtung vorderste Ausleitsegment genau in eine sich mit dem ersten auszuleitenden Gegenstand deckende Position gelangt. Dadurch wird sichergestellt, daß die maximale Anzahl von Ausleitsegmenten für eventuell nachfolgende auszuleitenden Gegenstände nutzbar ist.

Mechanisch besonders einfach läßt sich die Ausfahrbewegung (Y-Richtung) der Ausleitsegmente und die Auswahl der Ausleitsegmente realisieren, die auszufahren sind, um die ermittelten Gegenstände auszuleiten. Die Ausleitsegmente sind im allgemeinen in horizontaler Richtung aus- und einfahrbar. In den Ausleitsegmenten kann ein in vertikaler Richtung verschiebbarer Bolzen geführt sein, der oben und unten aus dem Ausleitsegment herausragt. Während der Vorwärtsbewegung des Schlittens wird gleichzeitig eine Schiene mit einem nach unten offenen C-Profil in geringem Abstand über den Ausleitsegmenten in Y-Richtung vor- und zurückbewegt. Die Schiene erfaßt dabei alle Bolzen, die sich in ihrer oberen Position befinden, und fährt die entsprechenden Ausleitsegmente dadurch während der Vorwärtsbewegung des Schlittens aus und wieder ein, so daß das vordere Ende der Ausleitsegmente etwa eine Sinus-Kurve beschreibt. Die Auswahl oder Aktivierung der einzelnen Ausleitsegmente erfolgt vorzugsweise während der Rückholbewegung des Schlittens. Es genügt dazu ein einziger Aktivator, der unterhalb des Schlittens angeordnet ist und die Bolzen der bei der nachfolgenden Vorwärtsbewegung aus- und einzufahrende Ausleitsegmente in die obere Position drückt. Dies kann durch einen Hubmagnet, einen Luftzylinder oder eine Luftdüse erfolgen. Besonders einfach ist die Verwendung einer Luftdüse als Aktivator. Das untere Ende der Bolzen wird dazu etwas verbreitert, um dem Luftstrahl eine ausreichende Angriffsfläche zu bieten.

Falls die zum Ansteuern und Aktivieren der einzelnen Bolzen benötigte Zeit die Rückholbewegung merklich verlangsamt, so können auch zwei Aktivatoren vorgesehen werden, die den Ausleitsegmenten abwechselnd zugeordnet sind, so daß der eine Aktivator die ungeraden und der andere Aktivator die geraden Ausleitsegmente aktiviert. Es besteht auch die Möglichkeit, jedes Ausleitsegment mittels eines eigenen Antriebs, z.B. eines pneumatischen Zylinders, ein- und auszufahren. Dies würde die Aktivatoren erübrigen. Die Vorrichtung wird dadurch zwar etwas aufwendiger, erlaubt andererseits die Ausleitsegmente unterschiedlich weit auszufahren und damit die Gegenstände auf unterschiedliche Bahnen auszuleiten.

Die in Y-Richtung verfahrbare Schiene kann auf dem Schlitten selbst montiert sein, so daß sie sich auch in X-Richtung mit dem Schlitten mitbewegt, oder sie kann auf demselben Rahmengestell wie der Schlitten geführt sein, wobei dann die oberen Enden der Bolzen in der Schiene in X-Richtung gleiten. Mechanisch einfacher ist die letztere Ausführung, da dann der Antrieb für die Y-Bewegung der Schiene nicht von dem Schlitten sondern vom Rahmengestell getragen wird. Durch das geringe Gewicht des Schlittens ergibt sich auch eine höhere Arbeitsgeschwindigkeit.

Die Bewegung des Schlittens und die Bewegung der Schienen werden vorzugsweise jeweils durch einen Servo- oder Schrittmotor über eine Kette oder Zahnriemen bewirkt, so daß die Position des Schlittens und der Schiene zu jedem Zeitpunkt genau steuerbar sind. Die Ausleitkurve, auf der sich das an den Gegenständen angreifende vordere Ende eines ausgefahrenen Ausleitsegments bewegt, läßt sich dadurch exakt steuern. Bevorzugt wird eine glatte Ausleitkurve, d.h. sanftes Angreifen an den Gegenständen, relativ schnelles Überschieben der Gegenstände von dem Transporteur beispielsweise auf einen parallel dazu verlaufenden anderen Transporteur, so daß die Gegenstände in keinem Moment den Kontakt zum Ausleitsegment verlieren und dadurch instabil werden. Dies ist insbesondere für leere Getränkeflaschen von Bedeutung. Durch diese Form der Ausleitkurve wird ferner der Kontakt zwischen dem Ausleitsegment und dem Gegenstand sanft gelöst, so daß auch hier ein eventuelles Zurückkippen der Gegenstände weitgehend verhindert wird. Danach können die Ausleitsegmente möglichst schnell eingefahren werden. Am Ende der Ausleitbewegung des Schlittens werden die Bolzen der einzelnen Segmente alle in ihre untere Position oder sonstige Nichtaktivierungsposition gebracht. Dies kann z.B. durch eine kurze Abwärtsbewegung der Schiene geschehen.

Das Ausleiten auf unterschiedliche Bahnen kann auch durch mehrere auf oder über dem Schlitten angebrachte Einrichtungen, wie die bereits erwähnte Schiene bewerkstelligt werden, die sich in Y-Richtung hin und herbewegen. Die Ausleitsegmente werden bei der Aktivierung entsprechend der gewünschten Ausleitkurve in eine der Einrichtungen eingeklinkt. Auch mittels einer einzigen sich in Y-Richtung bewegenden Einrichtung können unterschiedliche Ausleitwege realisiert werden, indem jedes Ausleitsegment mehrere Aktivierungsbolzen aufweist, die an unterschiedlichen Ausfahrpositionen automatisch dann wieder ausklinken und dadurch zu unterschiedlich weiten Ausleitbahnen führen.

Eine andere Möglichkeit zur Aktivierung der Ausleitsegmente besteht darin, die Ausleitsegmente auf einer Achse verschwenkbar zu lagern, die auf dem Schlitten in X-Richtung zeigend und in Y-Richtung verschiebbar gelagert ist. In ihrer Ruhe-, Ausgangs- oder Nichtaktivierungsposition sind alle Ausleitsegmente vertikal noch oben gerichtet und werden in dieser Position durch Haltemittel, beispielsweise Permanentmagnete, gehalten. Zur Aktivierung werden die betreffenden Ausleitsegmente durch Luftdüsen oder Stößel von den Haltemitteln gelöst, so daß sie nach unten in die Horizontale klappen. Diese Auswahl oder Aktivierung erfolgt zweckmäßig wieder während der Rückholbewegung des Schlittens. Die Achse ist ähnlich wie die bei dem vorausgehenden Beispiel erwähnte Schiene in Y-Richtung vor- und zurückbewegbar und befindet sich während der Rückholbewegung des Schlittens in der zurückgezogenen Position. Während des Ausleitvorgangs, d.h. während der Bewegung des Schlittens in X-Richtung, bewegt sich die Achse mit den darauf gelagerten aktivierten, horizontalen und den nicht aktivierten, vertikalen Ausleitsegmente nach vorne, so daß die aktivierten, horizontalen Ausleitsegmente an den betreffenden Gegenständen angreifen und sie ausleiten. Am Ende der Ausleitstrecke werden alle Ausleitsegmente wieder in ihre Ruheposition geschwenkt. Dies kann beispielsweise mittels einer sich parallel zur Achse erstreckenden, linear verschiebbaren Deaktivierungsschiene erfolgen, die an nach unten gerichteten Verlängerungen der Ausleitsegmente angreift. Die Deaktivierungsschiene kann auch um die Achse verschwenkbar sein. Dazu können auch an der Achse radiale, die Ausleitsegmente mitnehmende Finger abstehen und kann die Achse drehbar gelagert sein, so daß durch eine einfache 90°-Drehung der Achse die horizontal gerichteten Ausleitsegmente wieder in ihre vertikale Ruhelage gekippt werden können.

Die Bewegung in Y-Richtung muß nicht geradlinig sein. Sie kann auch eine Rotationsbewegung mittels einer fest, d.h. nicht vor- und zurückbewegbar, auf dem Schlitten montierten Welle sein. Die Aktivierung der Ausleitsegmente kann dabei darin bestehen, daß die betreffenden Ausleitsegmente für einen Ausleitvorgang drehfest mit der Welle gekoppelt werden und die Welle während der Bewegung des Schlittens in X-Richtung eine Drehung von insgesamt beispielsweise 30° ausführt. Damit die an den Gegenständen angreifenden Enden der Ausleitsegmente eine möglichst horizontale Bewegung ausführen, soll die Welle vertikal über der Bahn der Gegenstände angeordnet sein.

Die Breite der einzelnen Ausleitsegmente ist vorzugsweise kleiner als die halbe Abmessung der Gegenstände in Transportrichtung, bei Getränkeflaschen also als der halbe Durchmesser der Flaschen. Dadurch kann auch bei dicht aufeinanderfolgenden runden Gegenständen jeweils der Scheitelpunkt erfaßt werden, indem man gegebenenfalls zwei aufeinanderfolgende Ausleitsegmente ausfährt und damit ein Abgleiten des Gegenstandes von dem Segment verhindert. Dies bedeutet, daß entsprechend der relativen Lage zwischen Gegenstand und Ausleitsegment entweder ein oder mehrere Ausleitsegmente ausgefahren werden können.

In der speziellen Situation, daß die Gegenstände in einem festen Raster transportiert werden, reicht es aus, wenige Segmente in dem gleichen Raster auf dem Schlitten vorzusehen. Eine solche Situation besteht z.B. wenn Getränkeflaschen durch eine Einleitschnecke oder ein Sternrad zugeführt werden und dadurch in einem festen Raster stehen. Der Schlitten braucht dann nur entsprechend dem Raster mit breiten Ausleitsegmenten bestückt zu werden.

Die erfindungsgemäße Vorrichtung kann auch bei sogenannten Verteilanlagen eingesetzt werden, bei denen Gegenstände gruppenweise auf eine zweite Transporteinrichtung verteilt werden. Hierbei kann es zweckmäßig sein, ein sehr breites Ausleitsegment und eine geringe Anzahl schmälerer Ausleitsegmente vorzusehen, wodurch im Einzelfall die Anzahl der zu verschiebenden Gegenstände ausgewählt bzw. angepaßt werden kann.

Durch die genaue Steuerbarkeit der Aus- und Einfahrbewegung der Ausleitsegmente können z.B. stabilere Behälter mit einer höheren Geschwindigkeit ausgeleitet werden, so daß sie eine höhere kinetische Energie erhalten und nach dem Abheben oder Lösen von den Ausleitsegmenten nicht sofort zum Stehen kommen, sondern sich aufgrund ihrer höheren kinetischen Energie nach dem Abheben oder Ablösen von den Ausleitsegmenten in Ausleitrichtung auf dem Transporteur weiterbewegen. Dadurch können die Gegenstände insgesamt weiter quer zur Transportrichtung verschoben werden, als die Ausfahrweite der Ausleitsegmente ist.

In bestimmten Fällen genügt auch ein einziges Ausleitsegment zum Ausleiten von Gegenständen, z.B. dann, wenn zwischen den Gegenständen ein Abstand besteht. Ein einzelnes Ausleitsegment kann insbesondere dann ausreichend sein, wenn die Gegenstände sehr stabil sind und daher in Y-Richtung stark beschleunigt werden können, so daß sie aufgrund ihrer Trägheit nach dem Abheben oder Lösen von dem Ausleitsegment sich noch weiter in Y-Richtung bewegen. Durch die Entkoppelung des X- und des Y-Antriebs können einzelnen Gegenständen unterschiedliche Impulse in Y-Richtung erteilt werden, so daß eine gezielte Verteilung der Gegenstände auf mehrere Ausleitbahnen möglich ist. Der Mindestabstand der Gegenstände wird hierbei durch die Ausleitzeit und Rückholzeit des Ausleitsegments bestimmt. Bei Verwendung von zwei oder mehr Ausleitsegmenten können die Mindestabstände der Gegenstände entsprechend kleiner sein, die Ausleitkurve flacher sein oder die Transportgeschwindigkeit höher sein.

Schließlich besteht auch noch die Möglichkeit, statt eines in X-Richtung verfahrbaren Schlittens zwei oder mehrere derartige Schlitten zu verwenden, die jeweils abwechselnd zum Einsatz kommen. Die Schlitten sind dabei an unterschiedlichen Positionen längs des Transporteurs angeordnet. Die Strecke, die jeder Schlitten in Transportrichtung hin und her bewegbar ist, kann dabei auch länger als der Abstand zwischen dem ersten und dem letzten Ausleitsegment plus dem minimalen Abstand der Gegenstände des betreffenden Schlittens sein. Die mehreren Schlitten können auch vertikal übereinander angeordnet sein. Die Ausführungsform mit mehreren Schlitten ist insbesondere für Ausführungsformen mit einem einzigen Ausleitsegment pro Schlitten interessant. Bei mehreren Ausleitsegmenten für jeden Schlitten werden Ausleitungen auf mehrere Ausleitbahnen vereinfacht.

Für die Aktivierung der Ausleitsegmente bestehen verschiedene Möglichkeiten. Neben der bereits erwähnten Aktivierung durch Bolzen ist es auch möglich, die Ausleitsegmente zur Aktivierung auszuklappen oder von oben oder unten in eine Aktivierungsposition auszufahren und dann wiederum den Ausleitvorgang zu starten.

Eine sehr vereinfachte Möglichkeit für einen festen Ablauf der Ausleitbewegung in Y-Richtung ergibt sich durch die Verwendung eines fest angeordneten Kurvenelements, durch das die sich in Aktivierungsposition befindenden Bolzen geführt werden. Ein gesonderter Antrieb für die Bewegung einer Schiene in Y-Richtung kann dann entfallen. Eine andere Möglichkeit besteht darin, die Schienen des Y-Antriebs über eine Kurvensteuerung mit dem X-Antrieb zu verbinden.

Die vorderen Angriffsflächen können sowohl glatt als auch speziell ausgeformt sein, beispielsweise um besonders labile Gegenstände oder Behälter zu stützen. Die vorderen Enden der Ausleitsegmente können auch mit Saugnäpfen versehen sein, die entsprechend angesteuert werden, um die Behälter beim Ausleitvorgang festzuhalten und später wieder freizugeben. Besonders labile Gegenstände können auch zwischen den Ausleitsegmenten von zwei gegeneinander gerichteten Ausleitvorrichtungen geführt werden, wobei die Ausleitvorrichtungen der einander gegenüberliegenden Seiten des Transporteurs angeordnet sind. Eine andere Lösungsmöglichkeit besteht darin, die Ausleitsegmente von oben nach unten auszufahren, und zwar jeweils auf der rechten und linken Seite eines Gegenstandes, und die Ausleitvorrichtung oberhalb der Gegenstände anzubringen und dann, nachdem die Ausleitsegmente links und rechts ausgefahren sind, diese entsprechend in Y-Richtung zu verschieben und sie dann wieder einzufahren. Bei solchen Ausführungsformen sind auch Zweifach-Ausleitungen denkbar, wobei die Gegenstände dann mittig zugeführt werden, die Ausleitsegmente von oben herabfallen und durch zwei Schienen oder sonstige Einrichtungen zur Verschiebung in Y-Richtung jeweils in die eine oder andere Richtung ausgeleitet werden.

In einer speziellen Ausführungsform können die vorderen Enden der Ausleitsegmente auch als Winkel mit einem sich in Transportrichtung erstreckenden Schenkel und einen an dessen vorderen Ende quer zur Transportrichtung angeordneten Schenkel ausgebildet sein. Die Gegenstände laufen dann gleichsam gegen einen Anschlag und es ist nicht mehr notwendig, den Schlitten voll synchron zur Transportgeschwindigkeit zu fahren, sondern er kann auch mit reduzierter Geschwindigkeit fahren, so daß während des Ausleitvorgangs zusätzlich noch ein Aufstauen oder Zusammenführen der Gegenstände stattfindet. Hierdurch wird es möglich, einzelne Gegenstände, die auf dem ersten Transporteur in einem Raster von großen Abständen angeordnet sind, auf einen langsamer laufenden zweiten Transporteur für die ausgeleiteten Gegenstände zusammenzuführen. Bei entsprechender Konstruktion der Ausleitsegmente kann der Schlitten auch mit höherer Geschwindigkeit als der des Transporteurs gefahren werden, wodurch die Gegenstände in Gruppen zusammengefaßt werden.

Ausführungsbeispiele der Erfindung werden nachfolgend anhand der Zeichnung erläutert. Es zeigen:
- Fig. 1: in Draufsicht ein Ausführungsbeispiel der Vorrichtung zum Ausleiten von Gegenständen mit verschiebbaren Ausleitsegmenten;
- Fig. 2: die Vorrichtung von Fig. 1 im Schnitt nach 2-2;
- Fig. 3: in Draufsicht ein Ausführungsbeispiel der Vorrichtung mit um klappbaren Ausleitsegmenten und
- Fig. 4: die Vorrichtung von Fig. 4 in Schnitt nach 4-4.

Bei den dargestellten Ausführungsbeispielen sind die transportierten Gegenstände Getränkeflaschen 10 und ist der Transporteur ein Transportband 12, z.B. ein Gliederkettenförderer. Die Flaschen 10 sind auf dem Transportband 12 in unregelmäßigen Abständen angeordnet und werden in Pfeilrichtung transportiert. Aus der Reihe der Flaschen 10 sollen die Flaschen 10' ausgeleitet werden, da sie in einer vorgeschalteten Inspektionseinrichtung als fehlerhaft erkannt wurden.

Unmittelbar neben dem Transportband 12 ist eine Ausleitvorrichtung 14 angeordnet. Die Ausleitvorrichtung 14 weist ein Rahmengestell 16 auf, in dem ein Schlitten 18 parallel zur Transportrichtung (X-Richtung) verfahrbar geführt ist. Der Schlitten 18 wird über einen Zahnriemen von einem X-Antrieb 20, der einen Schritt- oder Servomotor enthält, angetrieben.

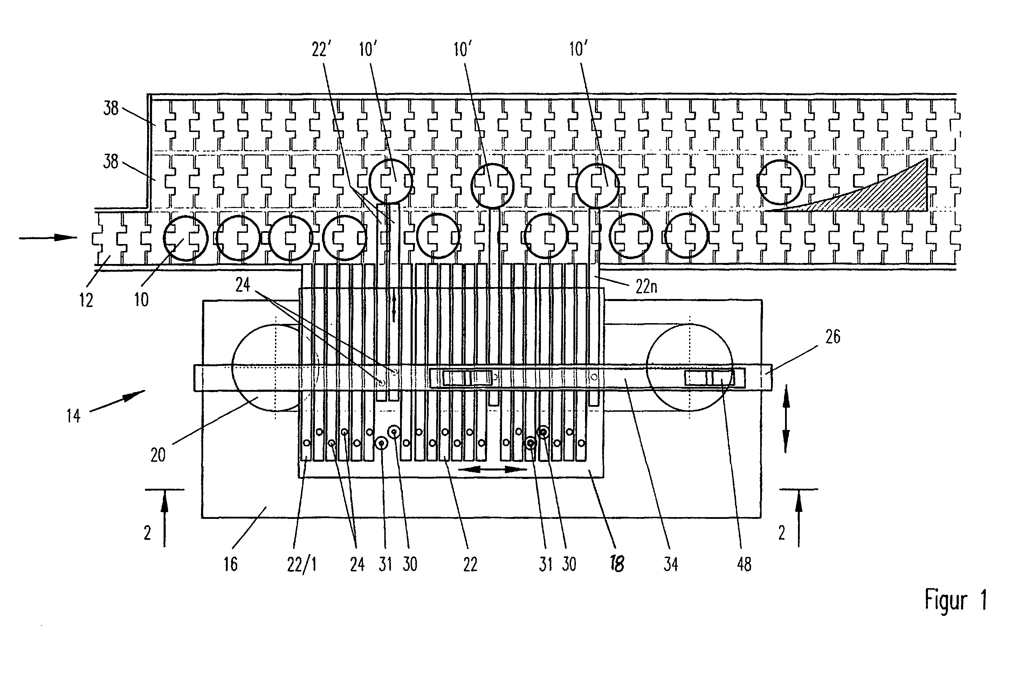

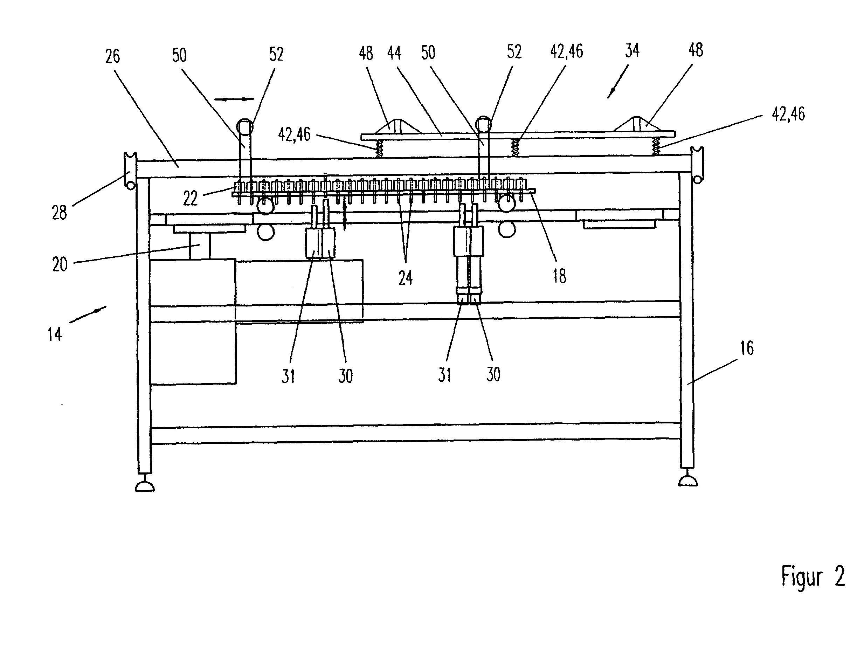

Bei dem in den Figuren 1 und 2 dargestellten Ausführungsbeispiel ist in dem Schlitten 18 eine Mehrzahl von Ausleitsegmenten 22 quer zur Transportrichtung (Y-Richtung) ein- und ausfahrbar gelagert. In Fig. 1 sind die Ausleitsegmente 22' ausgefahren, um die Flaschen 10' von dem Transportband 12 zu schieben. In dem dem Transportband abgewandten Endbereich jedes Ausleitsegments 22 ist ein Bolzen 24 vertikal zwischen einer unteren, nicht aktivierten und einer oberen, aktivierten Stellung verschiebbar gelagert (Fig. 2). In seiner aktivierten Position ist jeder Bolzen 24 mit einer Schiene 26 gekoppelt, die ein nach unten offenes C-Profil hat, parallel zum Transportband 12 verläuft und quer dazu mittels eines Y-Antriebs 28, der ebenfalls einen Schritt- oder Servomotor enthält, verfahrbar ist. Die Schiene 26 ist ebenfalls im Rahmengestell 16 geführt. Etwa in der Mitte in X-Richtung ist in dem Rahmengestell 16 ein Aktivator 30 in Form einer Luftdüse angebracht, der mittels eines Luftstrahls, der auf eine tellerförmige Verbreiterung (nicht dargestellt) am unteren Ende der Bolzen 24 trifft und die Bolzen aus der nicht aktivierten Position nach oben in die aktivierte Position drückt.

Ferner ist noch ein Deaktivator 34 vorgesehen, der nach einem Ausleitvorgang alle Bolzen 24 in die nicht aktivierte Position drückt. Durch Haftmagnete werden die Bolzen 24 in der deaktivierten Position gehalten, bis sie selektiv durch den Aktivator 30 in die aktivierte Position gedrückt werden, in der sie dann wiederum durch die Haftmagnete gehalten werden. Der Deaktivator 34 enthält bei dem dargestellten Ausführungsbeispiel eine innerhalb des C-Profils der Schiene 26 angeordnete Deaktivierungsschiene, die in der Zeichnung nicht erkennbar ist. Diese Deaktivierungsschiene ist innerhalb der rechten Hälfte der Schiene 26 angeordnet, d.h. innerhalb der Ruheposition des Schlittens 18. Sie ist durch Abstandsbolzen 42, die durch Öffnungen in der Oberseite der Schiene 26 verlaufen mit einer oberhalb der Schiene 26 und parallel zu ihr verlaufenden Hilfsschiene 44 fest verbunden. Durch Schraubendruckfedern 46 wird die Deaktivierungsschiene und die Hilfsschiene 44 nach oben gedrückt, wobei sich die Schraubendruckfedern 46 gegen die Oberseite der Schiene 26 abstützen. Auf der Oberseite der Hilfsschiene 44 befinden sich jeweils im Endbereich eine Rampe 48. An dem Schlitten 18 sind über Arme 50 jeweils an den beiden Enden Rollen 52 gelagert, die in der in Fig. 1 rechts liegenden Ruheposition des Schlittens 18 gegen die Rampen 48 laufen und dadurch die Hilfsschiene 44 und die fest damit verbundene Deaktivierungsschiene nach unten drücken. Die Anordnung ist so getroffen, daß in der äußersten rechten Position des Schlittens 18 die Rollen 52 an der höchsten Stelle der Rampen 48 stehen.

Zu Beginn eines Ausleitvorgangs befindet sich der Schlitten 18 in Fig. 1 in der rechten Position und alle Ausleitsegmente 22 sind vollständig eingefahren. Der Bolzen 24 des ersten Ausleitsegments 22/1 befindet sich dabei über dem Aktivator 30. Bei der nun einsetzenden Rückholbewegung (in Fig. 1 nach links) überfahren der Reihe nach alle Bolzen 24 der einzelnen Ausleitsegmente 22 den Aktivator 30. Der Aktivator 30 wird aufgrund der bereits vorliegenden Information über die auszuleitenden Flaschen 10 so gesteuert, daß die bei der nachfolgenden Vorwärts- oder Ausleitbewegung des Schlittens 18 auf der Höhe der auszuleitenden Flaschen 10' befindlichen Ausleitsegmente 22' in die aktivierte Position nach oben gedrückt werden, so daß sie in das nach unten offene C-Profil der Schiene 26 ragen. Wenn alle Bolzen 24 den Aktivator 30 überfahren haben, befindet sich der Schlitten 18 in seiner Anfangsposition für die eigentliche Ausleitbewegung, das ist die in Fig. 1 linke Position. Der Schlitten 18 wird aus dieser Anfangsposition zunächst auf die Geschwindigkeit des Transportbandes 12 beschleunigt, so daß er synchron mit dem Transportband 12 mitläuft. Sobald diese Geschwindigkeit erreicht ist, wird die Schiene 26 durch den Y-Antrieb 28 mit steigender Geschwindigkeit in Y-Richtung bewegt, wobei alle aktivierten Ausleitsegmente 22' gleichzeitig ausgefahren werden, so daß die gesamte Gruppe der sich neben dem Schlitten befindenden Flaschen gleichzeitig erfaßt wird und alle auszuleitenden Flaschen dieser Gruppe gleichzeitig ausgeleitet werden. Die sich auf der Höhe dieser Ausleitsegmente 22' befindenden Flaschen 10' werden dadurch gleichzeitig von dem Transportband 12 geschoben, und zwar im vorliegenden Fall auf ein Ausleitband 38, das in geringem Abstand parallel zum Transportband 12 und etwa mit gleicher Geschwindigkeit bewegt wird. Zum Ende der Ausfahrbewegung wird die Geschwindigkeit der Schiene 26 durch entsprechende Steuerung des Y-Antriebs 28 wieder verlangsamt, so daß die Flaschen 10 insgesamt auf einer glatten Kurve ausgeleitet werden. Anschließend wird der Schlitten 18 noch ein Stück synchron mit dem Transportband 12 bewegt, während die ausgefahrenen Ausleitsegmente 22' wieder eingefahren werden. Diese Einfahrbewegung kann mit hoher Geschwindigkeit erfolgen. Die Länge der Strecke, die der Schlitten 18 synchron mit dem Transportband 12 bewegt wird, ist dabei kürzer als der Abstand zwischen dem ersten und letzten Ausleitsegment 22/1 bzw. 22/n auf dem Schlitten 18 plus dem Minimalabstand zweier aufeinanderfolgender Flaschen. Nach dem vollständigen Einfahren der zuvor ausgefahrenen, aktivierten Ausleitsegmente 22' werden diese durch den Deaktivator 34 wieder in ihre nicht aktivierte Position gebracht, in der sie nicht mehr im Eingriff mit der Schiene 26 stehen, wenn diese vom Deaktivator 34 wieder freigegeben wird. Der Schlitten 18 befindet sich nun wieder in der Ruheposition und ist bereit für den nächsten Ausleitvorgang, wobei zunächst wiederum während der Rückholbewegung diejenigen Ausleitsegmente 22' aktiviert werden, die sich später auf der Höhe der auszuleitenden Flaschen 10' befinden.

In der Praxis ist es sinnvoll eine oder mehrere weitere Aktivatoren 31 zu verwenden, um die Rückholbewegung bereits einleiten zu können, bevor über alle Flaschen 10 der nächsten Gruppe die Informationen vorliegen, welche Flaschen 10' auszuleiten sind. Diese weiteren Aktivatoren 31 werden während der Rückholbewegung später überfahren, so daß für die betreffenden Ausleitsegmente 22 die Informationen über eine eventuelle Aktivierung erst entsprechend später vorzuliegen brauchen. Bei dem dargestellten Ausführungsbeispiel sind die Aktivatoren außerdem jeweils paarweise angeordnet, wobei der eine Aktivator 30 den geradzahligen Ausleitsegmenten 22 und der andere Aktivator 31 den ungeradzahligen Ausleitsegmenten 22 zugeordnet ist.

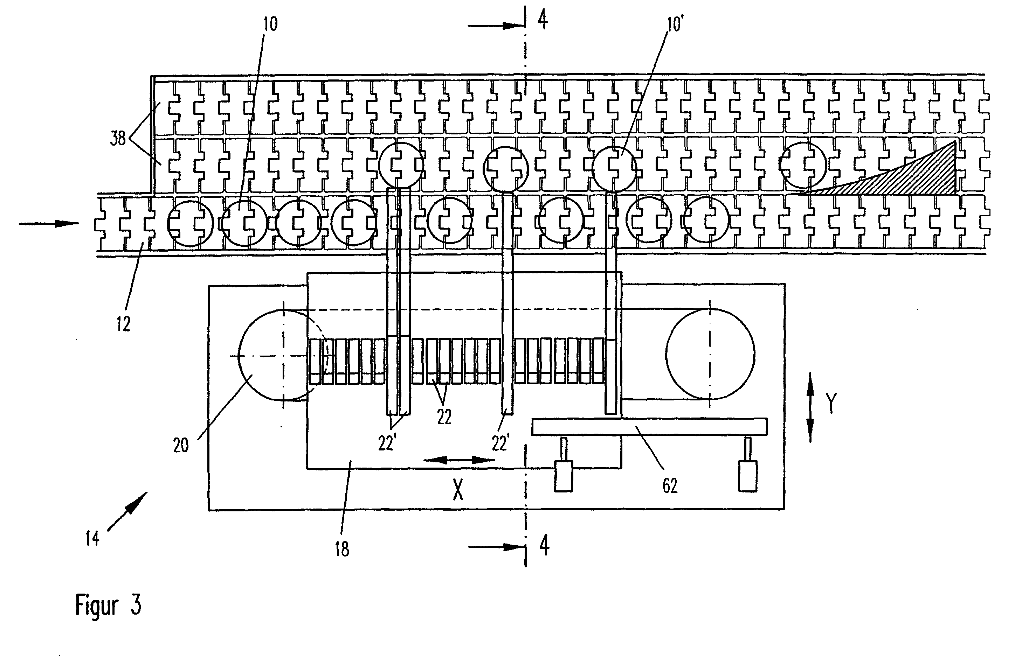

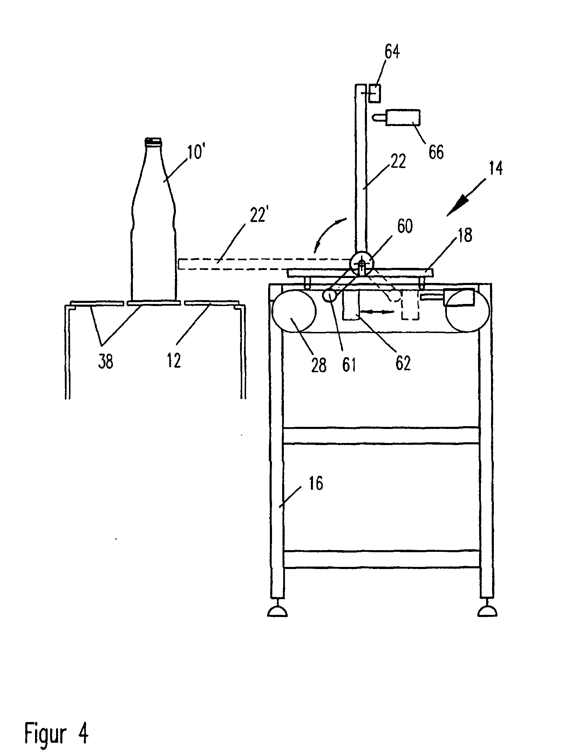

Bei dem in Fig. 3 und 4 gezeigten Ausführungsbeispiel sind die Ausleitsegmente 22 als Finger ausgebildet, die um eine Achse 60 zwischen einer deaktivierten, vertikal nach oben gerichteten Position und einer aktivierten, horizontalen Position verschwenkbar sind. Die Ausleitsegmente 22 sind nach unten über die Achse 60 in Form kurzer, abknickender Hebel 61 verlängert. Die Achse 60 ist auf dem Schlitten 18 montiert und in Y-Richtung vor- und zurückbewegbar. Mittels einer Deaktivierungsschiene 62, die unterhalb der Achse 60 in Y-Richtung verschiebbar gelagert ist und an den Enden der Hebel 61 angreift, können alle Ausleitsegmente 22 nach ober in die deaktivierte Position geklappt werden. Permanentmagnete 64 halten die Ausleitsegmente 22 in ihrer deaktivierten Position. Zur Aktivierung werden die Ausleitsegmente 22 durch Luftdüsen 66 von den Permanentmagneten gelöst. Durch den Luftstrahl der Luftdüsen 66 und unter ihrem Eigengewicht klappen die Ausleitsegmente 22 nach unten in ihre horizontale, aktivierte Position, in der sie auf einer Führungsschiene (nicht dargestellt) aufliegen, die für jedes Ausleitsegment 22 eine Führungsnut aufweist.

Die Steuerung der Ausleitvorrichtung 14 erfolgt im wesentlichen so wie bei dem Ausführungsbeispiel der Figuren 1 und 2. Zu Beginn eines Ausleitvorgangs befinden sich der Schlitten 18 in der bewegungsabwärts liegenden Endposition und die Achse 60 und die Deaktivierungsschiene 62 in ihren zurückgezogenen Stellungen und alle Ausleitsegmente 22 sind deaktiviert. Sobald sich eine auszuleitende Getränkeflasche 10 auf dem Transportband 12 der Ausleitvorrichtung 14 nähert, fährt der Schlitten 18 entgegen der Transportrichtung in seine bewegungsaufwärts liegende Endposition. Bei dieser Rückholbewegung fahren alle Ausleitsegmente 22 an der feststehenden Luftdüse 66 vorbei und die für den nachfolgenden Ausleitvorgang benötigten Ausleitsegmente 22' werden aktiviert, indem sie durch einen kurzen Luftstrahlimpuls von dem Permanentmagnet 64 gelöst werden, so daß sie nach unten in die Horizontale klappen. Wenn sich die erste auszuleitende Flasche 10' auf Höhe des vorderen Endes des Feldes von Ausleitsegmenten befindet, wird der Schlitten 18 auf etwa die Geschwindigkeit des Transportbandes 12 beschleunigt und synchron damit wird die Achse 60 nach vorne zum Transportband 12 gefahren. Die aktivierten Ausleitsegmente 22' bewegen sich dadurch quer über das Transportband 12 und schieben die betreffenden Flaschen 10' vom Transportband 12 auf das Ausleitband 38. Am Ende der Ausleitbewegung des Schlittens 18 wird die Achse 60 wieder zurückgefahren. Die Deaktivierungsschiene 62 fährt dann kurz vor und zurück und legt die aktivierten Ausleitsegmente 22' an die Permanentmagnete 64 an, so daß alle Ausleitsegmente 22 wieder deaktiviert sind. Die Ausleitbewegung ist damit abgeschlossen und die Ausleitvorrichtung befindet sich wieder in ihrer Ausgangsposition und ist bereit für den nächste Ausleitvorgang.

### Liste der Bezugszeichen

- 10: Getränkeflaschen
- 12: Transportband
- 14: Ausleitvorrichtung
- 16: Rahmengestell
- 18: Schlitten
- 20: X-Antrieb
- 22: Ausleitsegment
- 24: Bolzen
- 26: Schiene
- 28: Y-Antrieb
- 30: Aktivator
- 34: Deaktivator
- 38: Ausleitband
- 42: Abstandsbolzen
- 44: Hilfsschiene
- 46: Schraubendruckfeder
- 48: Rampe
- 50: Arme
- 52: Rollen
- 60: Achse
- 61: Hebel
- 62: Deaktivierungsschiene
- 64: Permanentmagnete
- 66: Luftdüsen

## Patentansprüche

1. Vorrichtung zum Ausleiten von Gegenständen (10), die auf einem Transporteur (12) transportiert werden, mit einem oder mehreren Ausleitsegmenten (22), die eine Strecke mit dem Transporteur synchron mitbewegbar sind und quer zur Transportrichtung einzeln aus- und einfahrbar sind, um einen Gegenstand (10) von dem Transporteur (12) zu schieben, **dadurch gekennzeichnet,**
- **daß** das oder die Ausleitsegmente (22) in einem Schlitten (18) in Transportrichtung nebeneinander einzeln ein- und ausfahrbar geführt sind und
- **daß** der Schlitten (18) in Transportrichtung hin und her bewegbar ist.

2. Vorrichtung nach Anspruch 1, **dadurch gekennzeichnet, daß** der Schlitten (18) so gesteuert wird, daß er eine Strecke etwa synchron mit dem Transporteur (12) mitläuft, wobei die Länge der Strecke, die der Schlitten (18) mit dem Transporteur (12) etwa synchron mitläuft, kürzer ist als der Abstand zwischen dem ersten und dem letzten der in dem Schlitten (18) geführten Ausleitsegmente (22) plus dem minimalen Abstand der Gegenstände.

3. Vorrichtung nach Anspruch 1 oder 2, **dadurch gekennzeichnet, daß** mehrere Ausleitsegmente (22) in dem Schlitten (18) geführt sind.

4. Vorrichtung nach Anspruch 3, wobei eine quer zur Transportrichtung verfahrbare Schiene (26) vorgesehen ist, mit der die Ausleitsegmente (22) einzeln wahlweise kuppelbar sind.

5. Vorrichtung nach Anspruch 4, **dadurch gekennzeichnet, daß** die Schiene (26) durch einen Schritt- oder Servomotor verfahren wird.

6. Vorrichtung nach Anspruch 1, **dadurch gekennzeichnet, daß** die Ausleitsegmente (22) einzeln wahlweise mit einem Kurvenelement kuppelbar sind, so daß sie bei der Bewegung des Schlittens (18) synchron mit dem Transporteur (12) durch das Kurvenelement aus- und eingefahren werden.

7. Vorrichtung nach einem der Ansprüche 1 bis 7, **dadurch gekennzeichnet, daß** jedes der Ausleitsegmente (22) ein aktivierbares Element (24) enthält, das während der Rückholbewegung des Schlittens (18) durch einen Aktivator (30, 31) aktivierbar ist, so daß ein aktiviertes Ausleitsegment (22') bei der Synchronbewegung des Schlittens (18) mit dem Transporteur (12) aus- und eingefahren wird.

8. Vorrichtung nach einem der Ansprüche 1 bis 7, **dadurch gekennzeichnet, daß** mehrere Schlitten (18) in Abständen längs des Transporteurs (12) oder vertikal übereinander angeordnet und in Transportrichtung hin und her bewegbar. geführt sind.

9. Verfahren zum Ausleiten von Gegenständen (10), die auf einem Transporteur (12) mit einer vorgegebenen Transportgeschwindigkeit transportiert werden, wobei die auszuleitenden Gegenstände (10') mittels einer Ausleitvorrichtung (14) von dem Transporteur (12) geschoben werden, die ein oder mehrere Ausleitsegmenten (22) aufweist, die eine Strecke mit dem Transporteur (12) synchron mitbewegbar sind und quer zur Transportrichtung einzeln aus- und einfahrbar sind, **dadurch gekennzeichnet,**
- **daß** die Ausleitsegmente (22) in einem Schlitten (18) in Transportrichtung nebeneinander angeordnet sind,
- **daß** der Schlitten (18) in Transportrichtung hin und her bewegbar ist,
- **daß** die Länge der Strecke, die sich der Schlitten (18) mit dem Transporteur (12) bewegt, kürzer ist als der Abstand zwischen dem ersten (22/1) und dem letzten (22n) der Ausleitsegmente innerhalb des Schlittens (18), und zwar um die Wegstrecke, die sich der Transporteur (12) während der Rückbewegung des Schlittens (18) weiterbewegt, und
- **daß** die Gegenstände (10) gruppenweise von dem Transporteur geschoben werden, wobei jede Gruppe mit einem ersten auszuleitenden Gegenstand (10') beginnt und alle weiteren auszuleitenden Gegenstände (10') umfaßt, die innerhalb einer Wegstrecke auf den ersten auszuleitenden Gegenstand (10') folgen, deren Länge gleich der Länge der Mitbewegung des Schlittens (18) mit dem Transporteur (12) ist.

## Claims

1. Apparatus for diverting items (10) which are transported on a conveyor (12), comprising one or more diversion segments (22) which can be moved synchronously with the conveyor for a section and can be individually extended or retracted across the direction of transport in order to push an item (10) off the conveyor (12) **characterized in that**
- the diversion segment(s) (22) is (are) guided individually in extendable and retractable manner side by side in the direction of transport in a carriage (18) and
- the carriage (18) can be moved to and fro in the direction of transport.

2. Apparatus according to claim 1, **characterized in that** the carriage (18) is controlled such that it runs for a section roughly synchronously with the conveyor (12), the length of the section along which the carriage (18) runs roughly synchronously with the conveyor (12), being shorter than the distance between the first and the last of the diversion segments (22) guided in the carriage (18) plus the minimum distance between the items.

3. Apparatus according to claim 1 or 2, **characterized in that** several diversion segments (22) are guided in the carriage (18).

4. Apparatus according to claim 3, a movable rail (26) being provided which can be moved across the direction of transport, with which the diversion segments (22) can be optionally coupled individually.

5. Apparatus according to claim 4, **characterized in that** the rail (26) is moved by a stepped or servomotor.

6. Apparatus according to claim 1, **characterized in that** the diversion segments (22) can be selectively coupled with a curve element so that they are extended and retracted by the curve element synchronously with the conveyor (12) during the movement of the carriage (18).

7. Apparatus according to any one of claims 1 to 7, **characterized in that** each of the diversion segments (22) contains an activating element (24) which can be activated by an activator (30, 31) during the return movement of the carriage (18) so that an activated diversion segment (22') is extended and retracted during the synchronous movement of the carriage (18) with the conveyor (12).

8. Apparatus according to any one of claims 1 to 7, **characterized in that** several carriages (18) are arranged at intervals along the conveyor (12) or vertically on top of each other and are guided movable to and fro in the direction of transport.

9. Method for diverting items (10) which are transported on a conveyor (12) at a pre-set transport speed, the items (10') to be diverted being pushed off the conveyor (12) by means of a diversion apparatus (14) which has one or more diversion segments (22), which can be moved synchronously with the conveyor (12) for a section and can be individually extended or retracted across the direction of transport, **characterized in that**
- the diversion segments (22) are arranged side by side in the direction of transport in a carriage (18)
- the carriage (18) can be moved to and fro in the direction of transport
- the length of the section along which the carriage (18) moves with the conveyor (12) is shorter than the distance between the first (22/1) and the last (22n) of the diversion segments inside the carriage (18), by the section along which the conveyor (12) moves on during the backward movement of the carriage (18), and
- the items (10) are pushed in groups off the conveyor, each group beginning with a first item (10') to be diverted and including all further items (10') to be diverted which follow the first item (10') to be diverted within a section the length of which equals the length of the accompanying movement of the carriage (18) with the conveyor (12).

## Revendications

1. Dispositif pour mettre à l'écart des objets (10) transportés sur un transporteur (12) avec un ou plusieurs segments de mise à l'écart (22) qui peuvent se déplacer de manière synchrone sur une distance avec le transporteur et peuvent être sortis et rentrés de manière individuelle perpendiculairement au sens de transport afin de pousser un objet (10) hors du transporteur (12), **caractérisé en ce que**
- le ou les segments de mise à l'écart (22) sont guidés dans un chariot (18) les uns à côté des autres dans le sens de transport de manière à pouvoir être rentrés et sortis de manière individuelle, et
- le chariot (18) peut se déplacer selon un mouvement de va et vient dans le sens de transport.

2. Dispositif selon la revendication 1, **caractérisé en ce que** le chariot (18) est commandé de façon qu'il parcourt une distance de manière à peu près synchrone avec le transporteur (12), la longueur de la distance parcourue par le chariot (18) de manière à peu près synchrone avec le transporteur (12) étant plus courte que l'intervalle entre le premier et le dernier des segments de mise à l'écart (22) guidés dans le chariot (18) plus l'intervalle minimum entre les objets.

3. Dispositif selon la revendication 1 ou la revendication 2, **caractérisé en ce que** plusieurs segments de mise à l'écart (22) sont guidés dans le chariot (18).

4. Dispositif selon la revendication 3, dans lequel il est prévu un rail (26) qui peut se déplacer perpendiculairement au sens de transport et avec lequel les segments de mise à l'écart (22) peuvent être couplés au choix de manière individuelle.

5. Dispositif selon la revendication 4, **caractérisé en ce que** le rail (26) est déplacé par un moteur pas à pas ou un servomoteur.

6. Dispositif selon la revendication 1, **caractérisé en ce que** les segments de mise à l'écart (22) peuvent être couplés au choix de manière individuelle avec un élément de courbe de façon à pouvoir être sortis et rentrés par l'élément de courbe de manière synchrone avec le transporteur (12) lors du déplacement du chariot (18).

7. Dispositif selon l'une des revendications 1 à 7, **caractérisé en ce que** chacun des segments de mise à l'écart (22) contient un élément activable (24) qui peut être activé au moyen d'un activateur (30, 31) pendant le déplacement de retour du chariot (18) de façon à sortir et rentrer un segment de mise à l'écart activé (22') lors du déplacement synchrone du chariot (18) avec le transporteur (12).

8. Dispositif selon l'une des revendications 1 à 7, **caractérisé en ce que** plusieurs chariots (18) sont disposés à intervalles le long du transporteur (12) ou bien verticalement les uns au-dessus des autres et peuvent être guidés de façon à effectuer un mouvement de va et vient dans le sens de transport.

9. Procédé pour mettre à l'écart des objets (10) transportés sur un transporteur (12) à une vitesse de transport prédéterminée, les objets à mettre à l'écart (10') étant poussés hors du transporteur (12) au moyen d'un dispositif de mise à l'écart (14) présentant un ou plusieurs segments de mise à l'écart (22) qui peuvent se déplacer de manière synchrone sur une distance avec le transporteur et peuvent être sortis et rentrés de manière individuelle perpendiculairement au sens de transport, **caractérisé en ce que**
- les segments de mise à l'écart (22) sont disposés les uns à côté des autres dans le sens de transport dans un chariot (18),
- le chariot (18) peut se déplacer selon un mouvement de va et vient dans le sens de transport,
- la longueur de la distance sur laquelle le chariot (18) se déplace avec le transporteur (12) est plus courte que l'intervalle entre le premier (22/1) et le dernier (22n) des segments de mise à l'écart à l'intérieur du chariot (18) et ce de la longueur de course supplémentaire parcourue par le transporteur (12) pendant le mouvement de retour du chariot (18), et
- les objets (10) sont poussés par groupes hors du transporteur, chaque groupe commençant par un premier objet à mettre à l'écart (10') et comprenant tous les autres objets à mettre à l'écart (10') qui suivent le premier objet à mettre à l'écart (10') sur une distance de course dont la longueur est égale à la longueur du déplacement conjoint du chariot (18) et du transporteur (12).
